# FASCICULE DE BREVET EUROPEEN

(11) **EP 0 599 366 B1**
(45) Date de publication et mention de la délivrance du brevet: **27.05.1998**
(21) Numéro de dépôt: 93203054.7
(22) Date de dépôt: 02.11.1993
(51) Int. Cl.: H04N 7/167

(54) **Réseau de communication**
Kommunikationsnetz
Communication network

(30) Priorité: 26.11.1992 FR 9214358
(43) Date de publication de la demande: 01.06.1994
(73) Titulaire: SCHLUMBERGER INDUSTRIES, F-92120 Montrouge (FR)
(72) Inventeur: Monnin, Gérard, F-75013 Paris (FR)

(56) Documents cités:
- FUNKSCHAU vol. 61, no. 5 , 24 Février 1989 , MÜNCHEN pages 59 - 62 XP000011447 C.SCHEPERS 'EUROCRIPT - DER SCHLÜSSEL ZUM SCRAMBLING-PROBLEM?'
- ELEKTRONIK vol. 38, no. 6 , 17 Mars 1989 , MÜNCHEN pages 56 - 58 XP000039410 M.JÜNKE 'DIGITALES FERNSEHKONZEPT FÜR SATELLITEN-PAY-TV'
- IEEE TRANSACTIONS ON CONSUMER ELECTRONICS vol. 37, no. 3 , Aoüt 1991 , NEW YORK pages 432 - 436 XP000263219 V.LENOIR 'EUROCRIPT,A SUCCESSFUL CONDITIONAL ACCES SYSTEM'

## Description

La présente invention concerne un réseau de communication entre une station centrale émettant des informations codées et au moins un récepteur apte à reçevoir ces émissions et les décoder.

De façon plus précise, l'invention concerne plus particulièrement un tel réseau de communication à l'accès contrôlé avec au moins un récepteur muni d'une interface qui contrôle la connexion à la station centrale émettrice et les opérations internes, en particulier vérifie des droits d'accès d'un utilisateur, reçoit et décode lesdites émissions.
En d'autres termes, il s'agit d'un réseau de communication où, afin de contrôler le nombre d'utilisateurs, les titres d'accès des utilisateurs sont déterminés par un nombre limité des récepteurs spéciaux mais aussi par la necessité d'une authentification de chaque utilisateur avant de mettre en marche un récepteur.

On connaît par exemple de tels systèmes de réseaux télé et/ou audio et plus précisément des réseaux "PAY-TV". Dans un tel système, une société qui dirige et gère le réseau, contrôle la distribution des récepteurs spéciaux aux utilisateurs. Seuls ces utilisateurs qui payent leur participation obtiennent des droits d'accès à ce réseau et possèdent un tel récepteur spécial qui a la capacité de recevoir et décoder les émissions désirées.
En outre, si un utilisateur ne paye plus, on l'exclura du réseau en débranchant son récepteur ou en le supprimant.

Mais on connaît également les problèmes de fraude dans ces réseaux.

Par exemple, dans le passé, il y a eu plusieurs cas où quelques personnes ont démonté un récepteur, l'ont étudié et finalement copié afin d'éviter le paiement à la société émettrice.

En réaction, afin d'éviter et de gêner les copies de leurs récepteurs les sociétés émettrices des réseaux ont muni leurs récepteurs de composants très rares et spécialement développés pour des procédés très sophistiqués de codage/décodage des émissions. Considérant que ces récepteurs sophistiqués et coûteux ne seraient pas économiques, le remplacement d'un grand nombre d'anciens récepteurs n'est pas encore effectué.

Malgré de nombreux efforts pour contrôler le nombre des utilisateurs autorisés de tels réseaux, on connaît aujourd'hui un nombre élevé d'utilisateurs clandestins qui estime-t-on va augmenter.

L'objet de l'invention est donc de remédier à ces inconvénients en ne restreignant l'accès à un réseau de communication qu'aux tels clients ou utilisateurs qui sont autorisés à y participer.

De plus, certaines sociétés utilisent un système d'identification de l'utilisateur et d'authentification des droits d'accès à distance. Dans ces réseaux, un utilisateur demande par téléphone par exemple les droits d'accès au réseau pour au moins un événement audio-visuel par exemple ou une période d'accès. Si l'accès est donné, la société gérant ce réseau identifie le récepteur lié à l'utilisateur, vérifie les informations sur les droits d'accès et sur le décodage par un dispositif de mémoire du récepteur et laisse l'utilisateur mettre en marche le récepteur.

On sait que ces opérations de demande ou permission aux droits d'accès ne conviennent aux deux parties concernées que dans des réseaux où le nombre d'utilisateurs est élevé; plusieurs appels simultanés pourront conduire à des délais d'authentification de droits d'accès plus longs et cela pourra entraîner des utilisateurs mécontents et des lignes de téléphone surchargées.
C'est l'autre objet de l'invention d'éviter ces inconvénients aux utilisateurs et de faciliter l'effort d'authentification des droits d'accès.

Pour atteindre ces buts un tel réseau de communication, comme celui décrit dans l'article de FUNKSCHAU, vol. 61, N° 5, 24/02/89, MUNCHEN, pages 59-62, est muni d'un récepteur qui comporte un lecteur de carte incorporé dans le récepteur et contrôlé par l'interface et apte à recevoir et lire une carte à mémoire qui contient des informations sur les droits d'accès de l'utilisateur et des informations sur l'identification de cette carte.

Cela donne la possibilité à la société qui gère le réseau d'authentifier les informations qui sont stockées dans le dispositif de mémoire du récepteur, concernant l'identification et les droits d'accès de l'utilisateur. Mais de plus, la société gérant le réseau peut faire vendre des cartes à mémoire (comme des télécartes par exemple) aux utilisateurs. Ces cartes à mémoire contiennent des permissions d'accès déterminées.

Selon un mode de réalisation préféré de l'invention, le contenu des informations dans une telle carte à mémoire insérée dans le lecteur d'un récepteur, permettrait de supprimer le fait que la société gérante n'aie plus à s'adresser au récepteur pour lui transmettre des droits d'accès lors de l'appel d'un utilisateur.

Dans ce cas, l'invention prévoit un réseau de communication entre au moins une station centrale émettant des émissions codées et au moins un récepteur muni d'une interface qui contrôle la connexion à la station centrale émettrice au moyen de droits d'accès et les opérations internes, en particulier reçoit et décode lesdites émissions, et qui comporte un moyen d'authentification des droits d'accès d'un utilisateur avec une mémoire contenant des informations sur les droits d'accès et les modalités d'utilisation du récepteur par un utilisateur, réseau dans lequel :
- le récepteur est muni d'un lecteur de carte incorporé dans le récepteur et contrôlé par l'interface et apte à recevoir et lire une carte à mémoire qui contient des informations sur les droits d'accès de l'utilisateur et des informations sur l'identification de cette carte;
- chaque fois où l'utilisateur insère sa carte à mémoire dans le lecteur du récepteur, l'interface authentifie les droits d'utilisation du récepteur en comparant les informations sur les droits d'accès de la mémoire d'interface et la mémoire de la carte à mémoire;
- initialisée par la section centrale émettrice, l'interface du récepteur peut effectuer une modification des informations dans la mémoire de ladite interface,
caractérisé en ce que les informations de la mémoire de la carte à mémoire sont annulées dans la carte à mémoire après avoir été copiées et enregistrées dans la mémoire de l'interface du récepteur.

En d'autres termes : les informations dans la carte à mémoire qui définissent les droits d'accès sont consommables soit qu'elles concernent l'accès pour une émission spéciale ou un groupe d'émissions soit qu'elles concernent l'accès pendant une période déterminée ou un accès d'une combinaison des différents droits (une gamme d'émissions pour trois mois par exemple).

Et, bien entendu, le récepteur selon l'invention fonctionne aussi bien avec une carte à mémoire que sans ladite carte. C'est l'utilisateur qui détermine la façon de mettre en marche le récepteur.
- par une autorisation à distance de la société gérante ou
- par l'achat ponctuel d'une telle carte à mémoire.

Une copie frauduleuse d'une telle carte à mémoire ne vaut pas l'effort d'une telle action. Car les informations dans la carte à mémoire peuvent être très précises concernant la période et/ou l'évènement audiovisuel de leur exploitation ou consommation et étant donné qu'elles seront considérées comme n'étant plus valables après l'insertion de cette carte dans le lecteur du récepteur, les telles cartes copiées et contenant les mêmes informations déjà enregistrées dans le récepteur ne pourront plus servir une seconde fois.

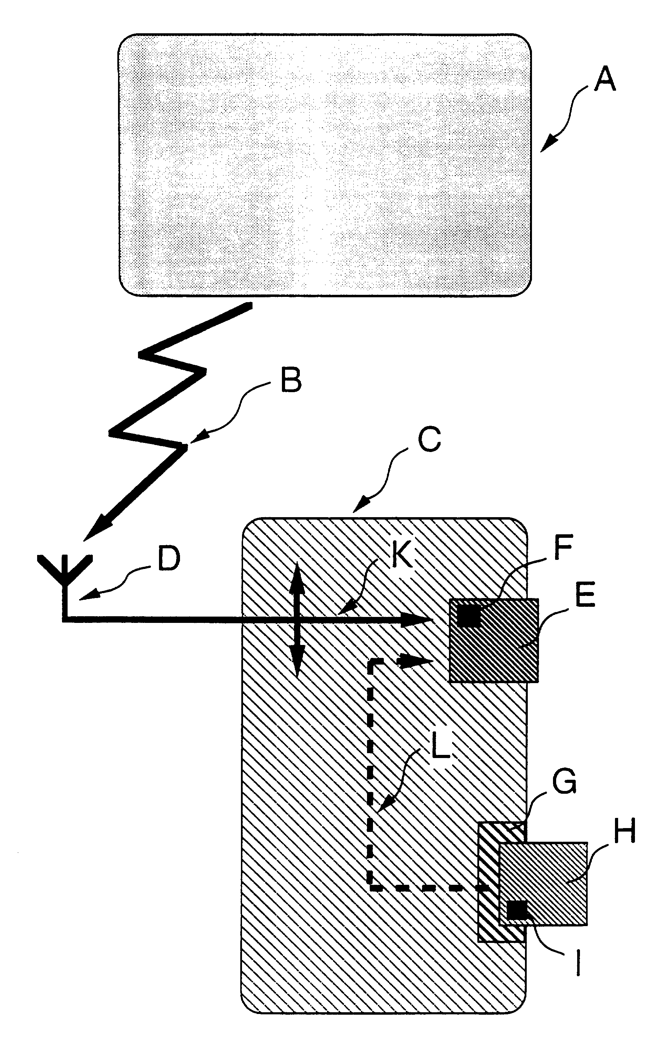

L'invention sera mieux comprise à la lecture de la description qui suit et qui se réfère à une figure annexée. Pour des raisons de clarté et pour faciliter la compréhension, la figure se restreint aux détails schématiques qui montrent un mode de réalisation de l'invention, donné à titre d'exemple non limitatif.

La figure montre un mode de réalisation d'un réseau de communication selon l'invention qui comporte une station centrale A gérée par une société et émettant des émissions codées par un câble ou -comme illustré- par des signaux Herziens B et qui comporte également au moins un récepteur C qui peut recevoir et décoder lesdites émissions. C'est évident que le récepteur C est muni d'un moyen de réception comme une antenne D par exemple, ou, dans le cas d'un réseau câblé, d'une prise de jonction et tous autres éléments nécessaires pour traiter les émissions reçues.

Le récepteur C loge une interface E qui contrôle toutes les opérations internes et aussi les opérations liées à la connexion à la station centrale A. Cette interface E contient une mémoire F où toutes les informations concernant la gestion du réseau par la station ou société centrale A
-par exemple-
* des informations sur l'identification du récepteur C
* des informations sur la gestion des droits d'accès
   -- les tarifs , la gamme d'émission par exemple
* des informations sur les paramètres de décodage.
sont stockées.

Egalement le récepteur C est muni d'un lecteur G de carte H à mémoire I. En général, les cartes H peuvent être des cartes qui contiennent des unités valables pour mettre en marche le récepteur C similairement comme par exemple : les télécartes qui contiennent des unités valables aux appels téléphoniques. Le type de la mémoire I n'est pas important s'il suffisait de fournir les possibilités de stocker des données comme unités consommables et les identifier comme non valables après leur consommation.

Le fonctionnement d'un tel réseau inventif peut être décrit comme il suit :

Un utilisateur ayant décidé de recevoir une ou plusieurs émissions et possédant un récepteur C, a deux possibilités pour mettre en marche ledit récepteur C :
(a) Contacter par un appel par exemple la société centrale A gérant le réseau afin de lui demander la permission d'accès et les droits de recevoir les émissions choisies, ou
(b) Insérer une carte H à mémoire I dans le lecteur G du récepteur C.

Dans le cas (a) la société centrale A vérifie les droits d'accès demandés par l'utilisateur et si elle décide d'authentifier ces droits, elle s'adressera au récepteur C et lui transmettra la permission qui comporte les droits d'accès et les modes d'utilisation du récepteur C. Le reçu de ces données dans l'interface E et leur stockage dans sa mémoire F permettent au récepteur de fonctionner. Cela est symbolisé dans la figure par la flèche K.

Dans le cas (b) le tel procédé d'utilisation du récepteur C est plus simple que dans (a), parce que les séquences pour contacter la société A et l'attente de l'authentification sont remplacées par la simple opération de l'insertion d'une carte H à mémoire I par l'utilisateur. Une telle carte H -prépayée par exemple- contient déjà les droits d'accès autorisés dans sa mémoire I. Et en copiant ces informations de la mémoire I de la carte H dans la mémoire F de l'interface E illustré par la flêche L le récepteur sera mis en marche.

Après avoir copié au moins une partie des informations concernant l'accès à partir de la mémoire I dans la mémoire F les dites informations sont considérées comme n'étant plus valables.

## Revendications

1. Réseau de communication entre au moins une station centrale (A) émettant des émissions codées et au moins un récepteur (C) muni d'une interface (E) qui contrôle la connexion à la station centrale (A) émettrice au moyen de droits d'accès et les opérations internes, en particulier reçoit et décode lesdites émissions, et qui comporte un moyen d'authentification des droits d'accès d'un utilisateur avec une mémoire (F) contenant des informations sur les droits d'accès et les modalités d'utilisation du récepteur (C) par un utilisateur, réseau dans lequel :
- le récepteur (C) est muni d'un lecteur (G) de carte incorporé dans le récepteur et contrôlé par l'interface (E) et apte à recevoir et lire une carte (H) à mémoire qui contient des informations sur les droits d'accès de l'utilisateur et des informations sur l'identification de cette carte (H).
- chaque fois où l'utilisateur insère sa carte (H) à mémoire dans le lecteur (G) du récepteur (C), l'interface (E) authentifie les droits d'utilisation du récepteur en comparant les informations sur les droits d'accès de la mémoire (F) d'interface et la mémoire (I) de la carte (H) à mémoire,
- initialisée par la section centrale (A) émettrice, l'interface (E) du récepteur (C) peut effectuer une modification des informations dans la mémoire (F) de ladite interface,
caractérisé en ce que les informations de la mémoire (I) de la carte (H) à mémoire sont annulées dans la carte à mémoire après avoir été copiées et enregistrées dans la mémoire (F) de l'interface (E) du récepteur (C).

2. Réseau de communication selon la revendication 1, caractérisé en ce que les informations dans la mémoire (F) de l'interface (E) du récepteur (C) peuvent être modifiées selon le contenu ou les informations de la carte (H) à mémoire.

## Patentansprüche

1. Kommunikationsnetz zwischen mindestens einer Zentralstation (A), die codierte Meldungen sendet, und mindestens einem Empfänger (C), der mit einer Schnittstelle (E) versehen ist, die mittels Zugriffsrechten die Verbindung mit der Sender-Zentralstation (A) und die internen Vorgänge steuert, insbesondere die besagten Meldungen empfängt und decodiert, und die ein Mittel für die Authentifizierung der Zugriffsrechte eines Benutzers enthält, mit einem Speicher (F), der Informationen über die Zugriffsrechte und die Benutzungsmodalitäten des Empfängers (C) durch einen Benutzer enthält, und in dem:
- der Empfänger (C) mit einem Kartenlesegerät (G) versehen ist, das in den Empfänger eingebaut ist und durch die Schnittstelle (E) gesteuert wird, und das fähig ist, eine Speicherkarte (H) aufzunehmen und zu lesen, die Informationen über die Zugriffsrechte des Benutzers und Informationen über die Identifizierung dieser Karte (H) enthält;
- immer wenn ein Benutzer seine Speicherkarte (H) in das Lesegerät (G) des Empfängers (C) einschiebt, die Schnittstelle (E) durch Vergleich der Informationen über die Zugriffsrechte des Schnittstellenspeichers (F) und des Speichers (I) der Speicherkarte (H) die Rechte des Empfängers auf Benutzung authentifiziert,
- nach Initialisierung durch die Sender-Zentralstation (A), die Schnittstelle (E) des Empfängers (C) eine Änderung der Informationen im Speicher (F) der besagten Schnittstelle vornehmen kann,
dadurch gekennzeichnet, daß die Informationen des Speichers (I) der Speicherkarte (H) in der Speicherkarte gelöscht werden, nachdem sie kopiert und im Speicher (F) der Schnittstelle (E) des Empfängers (C) aufgezeichnet worden sind.

2. Kommunikationsnetz gemäß Anspruch 1, dadurch gekennzeichnet, daß die im Speicher (F) der Schnittstelle (E) des Empfängers (C) enthaltenen Informationen entsprechend dem Inhalt oder den Informationen der Speicherkarte (H) geändert werden können.

## Claims

1. A communications network between at least one central station (A) which broadcasts coded information and at least one receiver (C) provided with an interface (E) which controls internal operations and connection to the broadcasting central station (A) by means of access rights, which receiver in particular receives and decodes said broadcasts, and includes means for authenticating access rights of a user with a memory (F) containing information about access rights and ways in which the receiver (C) can be used by a user, in which network:
• the receiver (C) is provided with a card reader (G) incorporated therein and controlled by the interface (E) and suitable for receiving and reading a memory card (H) which contains information about the access rights of the user and information about the identity of the card (H);
• each time the user inserts the memory card (H) into the reader (G) of the receiver (C), the interface (E) authenticates the rights to use the receiver by comparing the information about access rights in the memory (F) of the interface and in the memory (I) of the memory card (H); and
• initialized by the broadcasting central station (A), the interface (E) of the receiver (C) can modify information in the memory (F) of said interface;
characterized in that the information in the memory (I) of the memory card (H) is cancelled in the memory card after being copied and recorded in the memory (F) of the interface (E) of the receiver (C).

2. A communications network according to claim 1, characterized in that the information in the memory (F) of the interface (E) of the receiver (C) can be modified depending on the content or the information of the memory card (H).
